# EUROPÄISCHE PATENTSCHRIFT

(11) **EP 1 738 880 B1**
(45) Veröffentlichungstag und Bekanntmachung des Hinweises auf die Patenterteilung: **09.06.2010**
(21) Anmeldenummer: 06450069.7
(22) Anmeldetag: 08.05.2006
(51) Int. Cl.: B25J 9/04

(54) **Manipulator mit Schwenkantrieben und Lineartrieben zur Handhabung von Werkzeugen oder Werkstücken**
Manipulator with swivel drives and linear drives for handling tools or workpieces
Manipulateur avec actionneurs pivotants et actionneurs linéaires pour la manipulation d'outils ou de pièces

(30) Priorität: 27.06.2005 AT 10722005
(43) Veröffentlichungstag der Anmeldung: 03.01.2007
(73) Patentinhaber: Fill Gesellschaft m.b.H., 4942 Gurten (AT)
(72) Erfinder: Boindecker, Alois, 4942 Gurten (AT); Strasser, Franz, 4925 Pramet (AT)
(74) Vertreter: Hübscher, Helmut

(56) Entgegenhaltungen:
- DE-A1- 19 726 552
- DE-A1- 19 748 822
- JP-A- 56 015 995
- US-A1- 2003 099 522

## Beschreibung

Die Erfindung bezieht sich auf einen Manipulator zur Handhabung von Werkzeugen oder Werkstücken gemäß dem Oberbegriff des Anspruchs 1.
Ein solcher Manipulator ist aus der DE-A-197 26 552 bekannt.

Derartige Manipulatoren sind aus der Praxis hinlänglich bekannt und finden für Roboter Verwendung. Der Manipulator trägt dabei mit einer an die Arme des Manipulators anschließenden Manipulatorhand üblicherweise entweder ein Werkzeug zum Bearbeiten eines Werkstückes (DE 100 20 879 A1) oder ein Werkstück selbst und führt dieses zur Bearbeitung relativ zu einer ortsfesten Bearbeitungsmaschine (DE 92 04 108 U1). Grundsätzlich können dabei Arbeitsoperationen wie Sägen, Fräsen, Bohren, Gewindeschneiden, Entgraten u. dgl. mehr durchgeführt werden, wobei sich diese Manipulatoren zur Bearbeitung von Werkstücken mit verhältnismäßig kleinen Stückzahlen eignen, bei denen nur geringe Anforderungen an die Maßhaltigkeit gestellt werden, wie dies beispielsweise für die Grobbearbeitung von Werkstücken der Fall ist. Dies rührt daher, daß die üblichen Roboter als einfache Manipulatoren ausgelegt sind, also im wesentlichen dazu dienen Werkstücke von A nach B zu verlagern, weshalb sie, insbesondere wegen ihrer geringen Eigensteifigkeit, üblicher Weise lediglich mit einer Wiederholgenauigkeit von ± 0,1 mm Arbeiten, was zur Folge hat, daß keine engen Maßtoleranzen eingehalten werden können. Dies wird durch den Umstand verstärkt, daß der Manipulator bei spanabhebender Bearbeitung wegen der geringen Eigensteifigkeit zu Schwingungen angeregt werden kann, was sich wiederum negativ auf die Maßhaltigkeit auswirkt.

Anordnungen zur spielfreien mechanischen Drehmomentübertragung, insbesondere für Roboter und Manipulatoren sind ebenfalls bereits bekannt (DD 241 993 A3), mit denen insbesondere große Drehmomente auf engem Raum und mit hohen Geschwindigkeiten über einen Drehwinkel von nahezu 360° übertragen werden können. Dies wird im wesentlichen dadurch erreicht, daß zwei Zugmittel gegenläufig gespannt und parallel zueinander angeordnet sowie beidseits unter Bildung eines Umschlingungswinkels von mindestens 180° um zwei Zugmittelscheiben gelegt und mittels Form- und Kraftschluß bewirkender Spannelemente in den Treibscheiben befestigt sind. Mit derartigen Anordnungen läßt sich zwar das Spiel der Schwenkantriebe minimieren, eine wesentliche Verbesserung der Wiederholgenauigkeit läßt sich damit aber nicht erreichen. Die DE 19726552 A und die DE 19748822 A offenbaren beide Vorrichtungen zum Gewichtsausgleich von Roboterarmen. Mit derartigen Vorrichtungen können die Schwenkantriebe für die Roboterachsen entlastet werden, sodass die Schwenkantriebe lediglich die Schwenkkraft überwinden müssen.

Ausgehend von einem Stand der Technik der eingangs geschilderten Art liegt der Erfindung die Aufgabe zugrunde, einen Manipulator zur Handhabung von Werkzeugen oder Werkstücken zu schaffen, der mit möglichst einfachen Mitteln eine gegenüber dem Stand der Technik gesteigerte Wiederholgenauigkeit bei erhöhter Steifigkeit aufweist. Zudem soll die Möglichkeit bestehen, herkömmliche Manipulatoren bei Bedarf mit verhältnismäßig geringem Aufwand mit der Erfindung nachrüsten zu können.

Die Erfindung löst diese Aufgabe durch einen Manipulator gemäß Anspruch 1.

Mit der Erfindung wird in besonders einfache Weise ein Manipulator geschaffen, der einerseits zur Fertigung von Werkstücken mit engeren Toleranzen geeignet ist, da die Steifigkeit des Auslegers durch das zusätzliche Vorsehen des Lineartriebes in Folge der Vorspannung des Auslegers durch die gegenseitige Kraftaufprägung von Schwenkantrieben und Lineartrieb wesentlich erhöht wird. Anderseits wird durch den zusätzlich vorgesehenen Lineartrieb eine wesentliche Erhöhung der Steifigkeit der Roboterkinematik selbst durch eine mechanische Stabilisierung derselben erzielt. Dadurch können insbesondere spanabhebende Bearbeitungen von Werkstücken mit erhöhter Arbeitsleistung unter Einhaltung geforderter Maßtoleranzen vorgenommen werden. Die Schwenkantriebe umfassen üblicherweise koaxiale Getriebe, die im Bereich der Schwenkachsen angeordnet sind. Durch die gegenseitige Kraftaufprägung von Lineartrieb und Schwenkantrieb erhöht sich die Stabilität der Getriebe durch eine mechanische Vorspannung. Vorzugsweise werden als Linearantrieb Hydraulikzylinder eingesetzt, es könnten jedoch auch Spindeln, Federn oder andere beliebige Linearaktuatoren vorgesehen sein. Neben der Erhöhung der Getriebesteifigkeit im Arbeitspunkt verringern sich zudem die Betriebsbelastungen auf die Getriebe und erhöht sich somit die Standzeit des Manipulators, da die Lineartriebe, insbesondere die Hydraulikzylinder, Betriebskräfte direkt in das die Kräfte aufnehmende Grundgestell ableiten können. Zusätzlich wirken die Hydraulikzylinder als Dämpfungselemente gegen die bei der Bearbeitung auftretenden Schwingungen. Dadurch, daß die Lineartriebe zusätzlich zu den Schwenkantrieben vorgesehen sind, besteht zudem die Möglichkeit, bestehende Manipulatorsysteme mit den erfindungsgemäßen zusätzlichen Lineartrieben auszustatten und somit die Manipulatorsteifigkeit zu erhöhen und die Wiederholgenauigkeit bei der Positionierung von Werkstücken oder Werkzeugen zu verbessern.

Dazu greift der Lineartrieb einerends im Nahbereich der Schwenkachse an einem ersten Arm und andernends unter Freilassung wenigstens einer Schwenkachse im Nahbereich der Schwenkachse an einem zweiten Arm oder an der Basis an. Der Lineartrieb sollte dabei mit seinen Anlenkpunkten am Manipulator derart angeordnet sein, daß seine Anlenkpunkte zusammen mit dem direkt im Sinne einer gegensinnigen Kraftaufprägung zusammenwirkenden Schwenkantrieb ein möglichst großes Kraftdreieck bildet, das nicht nur den Schwenkantrieb bzw. die Schwenkantriebe sondern auch den Ausleger bzw. dessen Arme mechanisch vorspannt. Die Vorspannung der einzelnen Arme kann dabei gegeneinander und/oder gegen die Basis erfolgen.

Um sicherzustellen, daß dem Arm in Folge der gegenseitigen Kraftaufprägung von Lineartrieb und Schwenkantrieb keine Biegemomente um die Armlängsachsen aufgeprägt werden, empfiehlt es sich, wenn je zwei Lineartriebe zu einer Betätigungseinheit zusammengefaßt sind, die zueinander symmetrisch beidseits des Auslegers angeordnet sind. Damit ist gewährleistet, daß die Arme des Auslegers lediglich auf Biegung und nicht auf Torsion beansprucht werden. Selbstverständlich könnten auch Lineartriebe vorgesehen sein, die direkt im Bereich einer Armlängsachse am Arm angreifen.

Um den Ausleger nicht nur in der Schwenkebene der Auslegerarme, sondern auch quer dazu verspannen zu können und somit die Wiederholgenauigkeit noch weiter zu steigern, können die Betätigungsachsen der Lineartriebe unter einem Spitzen Winkel zueinander angeordnet sein. Die Lineartriebe einer Betätigungseinheit greifen dabei beispielsweise mit einem größeren Abstand zueinander an einer Basis an, als sie an einem Arm des Auslegers angreifen, wodurch sich bei einer Kraftaufprägung auf den Lineartrieb eine zusätzliche Stabilisierung des Manipulators quer zur Armschwenkebene ergibt.

Üblicherweise bildet die Basis eine Art Karussell, die auf einem Gestell drehbar gelagert ist, wodurch der gesamte Manipulator um eine üblicherweise zu den Schwenkachsen der Ausleger senkrechte Achse drehbar gelagert ist. Um nun auch Drehbewegungen um diese Achse im Zuge der Bearbeitung von Werkstücken möglichst gering zu halten, kann für die auf einem Gestell drehbar gelagerte Basis ein wenigstens zwei Drehantriebe umfassender Antrieb vorgesehen sein, wobei die beiden Drehantriebe im Sinne einer gegenseitigen Kraftaufprägung antreibbar sind, wodurch einerseits das konstruktionsbedingte Spiel zwischen Zahnkranz und eingreifendem Ritzel eliminiert wird und anderseits eine besonders exakte Positionierung um diese Achse möglich wird. Besonders einfache Konstruktionsverhältnisse ergeben sich, wenn der Basis ein Zahnkranz zugeordnet ist, in den ein vorzugsweise am Gestell befestigter Hilfsantrieb eingreift, wobei der Drehantrieb der Basis und der Hilfsantrieb im Sinne einer gegenseitigen Kraftaufprägung angetrieben sind.

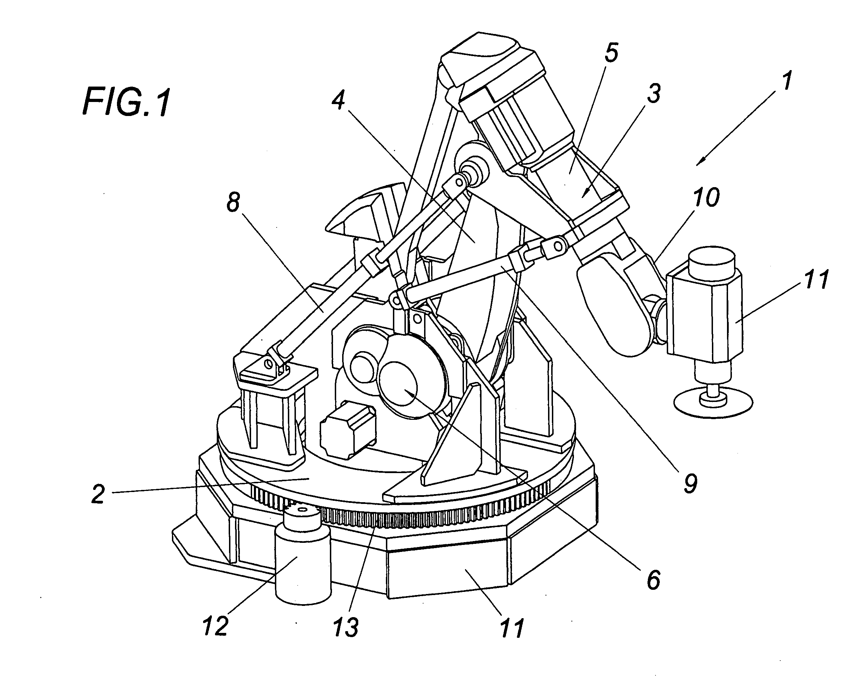

Der Zeichnung ist die Erfindung anhand eines schematischen Ausführungsbeispieles dargestellt. Es zeigen
- Fig. 1: einen erfindungsgemäßen Manipulator in Schrägansicht,
- Fig. 2: den Manipulator aus Fig. 1 in Forderansicht,

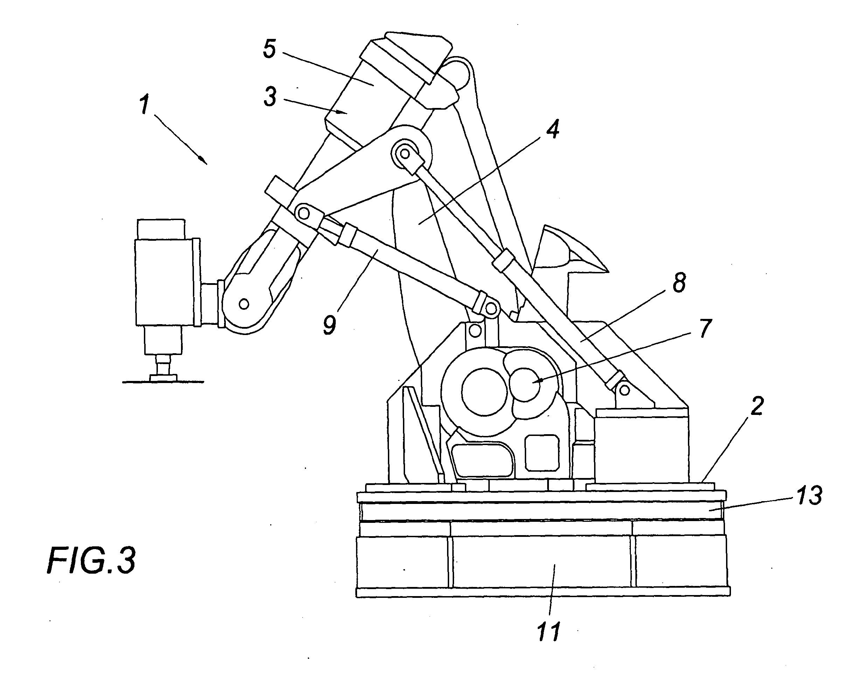

- Fig. 3: den Manipulator in Seitenansicht und
- Fig. 4: und 5 Verdrehwinkel/Drehmoment-Diagramme von Schwenkantrieben für die Arme eines Manipulators ohne und mit Vorspannung durch einen Lineartrieb.

Ein Manipulator 1 zur Handhabung von Werkzeugen oder Werkstücken umfaßt einen einerends auf einer Basis 2 schwenkbar gelagerten Ausleger 3, dessen beide Arme 4, 5 schwenkverstellbar miteinander verbunden sind. Die zwei nicht explizit dargestellten Schwenklager der Arme 4, 5 sind mit den Schwenkachsen der Arme 4, 5 zugeordneten Schwenkantrieben 6, 7 ausgestattet. Zusätzlich zu den Schwenkantrieben 6, 7 der Arme 4, 5 sind Lineartriebe 8, 9 in Form von Hydraulikzylindern vorgesehen, die einerends an einem Arm 4, 5 und andernends an der Basis 2 angreifen, wobei die Lineartriebe 8, 9 und die Schwenkantriebe 6, 7 im Sinne einer gegenseitigen Kraftaufprägung ansteuerbar sind. Durch diese Maßnahme werden die Getriebe vorgespannt, wodurch sich die Getriebesteifigkeit im Vorspannungspunkt erhöht. Zudem wir die Steifigkeit der Gesamtkonstruktion verbessert und die Betriebsbelastungen auf die Schwenkantriebe 6, 7 sinken, da die Hydraulikzylinder Betriebskräfte direkt aufnehmen und in die Basis 2 ableiten. Weiters wirken die Hydraulikzylinder als Dämpfungselemente gegen die bei der Bearbeitung auftretenden Schwingungen.

Die Lineartriebe 8, 9 greifen einerends im Nahbereich der Schwenkachse an einem ersten Arm 4, 5 und andernends unter Freilassung wenigstens einer Schwenkachse an der Basis 2 an. An dem Arm 5 ist eine Manipulatorhand 10 angeordnet, die im dargestellten Ausführungsbeispiel ein Bearbeitungswerkzeug 14 aufnimmt. Genauso könnte die Manipulatorhand 10 allerdings auch ein Werkstück aufnehmen und einer feststehenden Bearbeitungsstation zuführen.

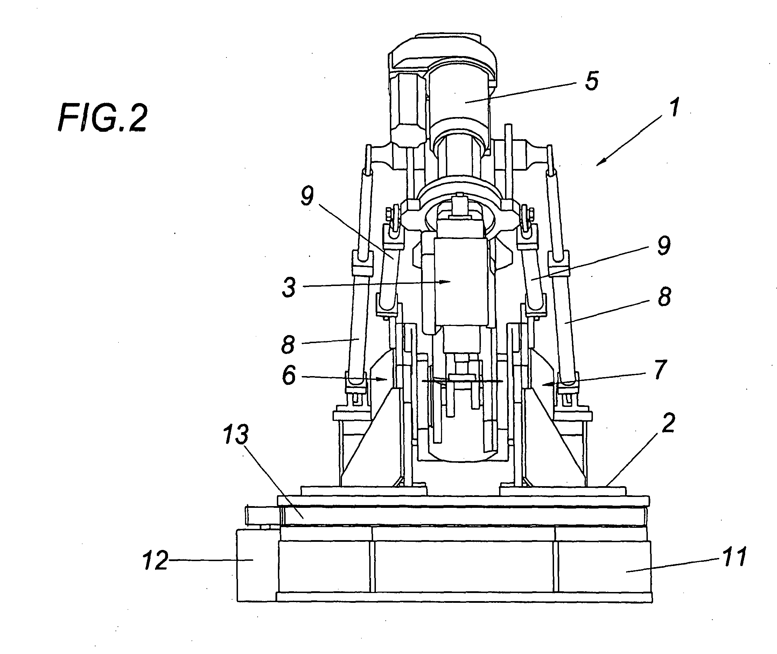

Je zwei Hydraulikzylinder 8, 9 sind zu einer Betätigungseinheit zusammengefaßt, die zueinander symmetrisch beidseits des Auslegers 3 angeordnet sind (siehe insbesondere Fig. 2). Sind die Betätigungsachsen der Lineartriebe 8, 9 unter einem spitzen Winkel zueinander angeordnet (Fig. 2) so wird durch diese Schrägstellung der Lineartriebe 8, 9 gegenüber dem Ausleger 3 eine verbesserte Seitenstabilität des Manipulators 1 erzielt. Um das Drehspiel des Manipulators 1 samt seiner Basis 2 auf einem Gestell 11 zu verringern, wobei die Basis 2 karussellartig auf dem Gestell 11 drehbar angetrieben gelagert ist, ist zusätzlich zu einem nicht näher dargestellten Drehantrieb für die Basis 2 ein Hilfsantrieb 12 vorgesehen, der in einen Zahnkranz 13 eingreift und der im Sinne einer gegenseitigen Kraftaufprägung mit dem Drehantrieb der Basis 2 angetrieben ist.

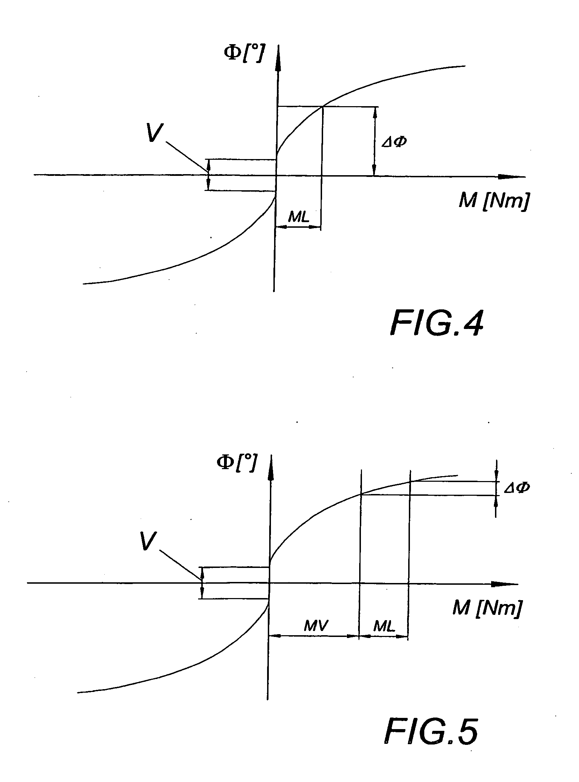

Den Fig. 4 und 5 sind Getriebeschaubilder ohne und mit hydraulischer Verspannung zu entnehmen, wobei mit V das Verdrehspiel des Getriebes um eine Ruhelage bezeichnet ist. Ohne hydraulische Vorspannung Fig. 4 ergibt sich bei einem vorgegebenen Lastmoment ML ein die Wiederholgenauigkeit des Manipulatorarms wesentlich bestimmendes Verdrehspiel ΔΦ. Wird dasselbe Getriebe mit einem erfindungsgemäßen Lineartrieb zusätzlich vorgespannt ergibt sich bei einem Vorspannmoment MV und einen gleichen Lastmoment ML ein um ein vielfaches Reduziertes Verdrehspiel Δφ in Folge der Verspannung (Fig. 5).

## Patentansprüche

1. Manipulator (1) zur Handhabung von Werkzeugen oder Werkstücken mit einem einerends auf einer Basis (2) schwenkbar gelagerten, wenigstens doppelarmigen Ausleger (3) dessen Arme (4, 5) schwenkverstellbarmiteinander verbunden sind, wobei die wenigstens zwei Arme jeweils mit einem der jeweiligen Schwenkachse zugeordneten Schwenkantrieb (6, 7) ausgestattet sind, wobei den Armen (4, 5) zusätzlich zu den Schwenkantrieben (6, 7) wenigstens ein Lineartrieb (8, 9) zugeordnet ist, der einerends an einem Arm (4, 5) und andernends an einem anderen Arm oder an der Basis (2) angreift, wobei Lineartrieb und wenigstens ein Schwenkantrieb (6, 7) im Sinne einer gegenseitigen Kraftaufprägung ansteuerbar sind, **dadurch gekennzeichnet, daß** der Lineartrieb (8, 9) einerends an einem ersten Arm (4, 5) im Nahbereich der Schwenkachse des diesen ersten Arm unmittelbar nachgelagerten Arm oder im Nahbereich der Schwenkachse der Manipulatorhand angreift, und andernends unter Freilassung wenigstens einer schwenkangetriebenen Schwenkachse an einem dem ersten Arm vorgelagerten zweiten Arm im Nahbereich der Schwenkachse dieses zweiten Armes (4, 5) oder an der Basis (2) angreift, wobei die Anlenkpunkte des Linartriebes (8, 9) am Manipulator (1) und die wenigstens eine freigelassene Schwenkachse ein Kraftdreieck aufspannen.

2. Manipulator nach Anspruch 1, **dadurch gekennzeichnet, daß** je zwei Lineartriebe (8, 9) zu einer Betätigungseinheit zusammengefaßt sind, die zueinander symmetrisch beidseits des Auslegers angeordnet sind.

3. Manipulator nach Anspruch 1 oder 2, **dadurch gekennzeichnet, daß** die Basis (2) auf einem Gestell (11) drehbar gelagert ist, wobei wenigstens zwei Drehantriebe vorgesehen sind, die im Sinne einer gegenseitigen Kraftaufprägung angetrieben sind.

4. Manipulator nach Anspruch 3, **dadurch gekennzeichnet, daß** der Basis (2) ein Zahnkranz (13) zugeordnet ist, in den ein vorzugsweise am Gestell (11) befestigter Hilfsantrieb (12) eingreift, wobei der Drehantrieb der Basis und der Hilfsantrieb (12) im Sinne einer gegenseitigen Kraftaufprägung angetrieben sind.

## Claims

1. Manipulator (1) for handling tools or work pieces having a boom (3) which is pivotably mounted at one end on a base (2) and is at least a double-arm boom, the arms (4, 5) of which are connected to each other in a pivotably adjustable manner, wherein the at least two arms are each equipped with a pivot drive (6, 7) allocated to the respective pivot axis, wherein at least one linear drive (8, 9) is allocated to the arms (4, 5) in addition to the pivot drives (6, 7), which linear drive engages at one end on an arm (4, 5) and at the other end on another arm or on the base (2), wherein the linear drive and at least one pivot drive (6, 7) can be controlled to produce a mutual application of force, **characterised in that** the linear drive (8, 9) engages at one end on a first arm (4, 5) in the proximity of the pivot axis of the arm which is mounted immediately downstream of this first arm, or in the proximity of the pivot axis of the manipulator hand, and engages at the other end - leaving free at least one pivotable driven pivot axis - on a second arm mounted upstream of the first arm in the proximity of the pivot axis of this second arm (4, 5), or engages on the base, wherein the articulation points of the linear drive (8, 9) on the manipulator (1) and the at least one pivot axis which is left free span a power triangle.

2. Manipulator as claimed in claim 1, **characterised in that** in each case two linear drives (8, 9) are combined to form an actuating unit, being disposed on both sides of the boom in a mutually symmetrical manner.

3. Manipulator as claimed in claim 1 or 2, **characterised in that** the base (2) is rotatably mounted on a stand (11), wherein at least two rotary drives are provided which are driven to produce a mutual application of force

4. Manipulator as claimed in claim 3, **characterised in that** the base (2) is allocated a geared rim (13) into which an auxiliary drive (12), which is preferably attached to the stand (11), engages, wherein the rotary drive of the base and the auxiliary drive (12) are driven to produce a mutual application of force.

## Revendications

1. Manipulateur (1) pour la manipulation d'outils ou de pièces d'oeuvre, avec un élément articulé (3) au moins à double bras, monté à pivotement à une extrémité sur une base (2), dont les bras (4, 5) sont reliés ensemble avec une possibilité de réglage par pivotement, les au moins deux bras étant chacun équipés d'un actionneur pivotant (6, 7) associé à l'axe de pivotement respectif, aux bras (4, 5) étant, en plus des actionneurs pivotants (6, 7), associés au moins un actionneur linéaire (8, 9), agissant, à une extrémité, sur un bras (4, 5) et, à l'autre extrémité, sur un autre bras ou sur la base (2), l'actionneur linéaire et au moins un actionneur pivotant (6, 7) étant susceptibles d'être commandés au sens d'une inculcation de force réciproque, **caractérisé en ce que** l'actionneur linéaire (8, 9), à une première extrémité, agit sur un premier bras (4, 5), dans une zone proche de l'axe de pivotement du bras monté en palier à la suite directe de ce premier bras ou agit dans la zone proche de l'axe de pivotement de la main de manipulateur et, à l'autre extrémité, en laissant libre au moins un axe de pivotement entraîné en pivotement, agit sur un deuxième bras, monté en palier à l'avant du premier bras, dans la zone proche de l'axe de pivotement de ce deuxième bras (4, 5), ou agit sur la base (2), les points d'articulation de l'actionneur linéaire (8, 9) sur le manipulateur (1) et le au moins un axe de pivotement laissé libre définissant un triangle de forces.

2. Manipulateur selon la revendication 1, **caractérisé en ce que** chaque fois deux actionneurs linéaires (8, 9) sont regroupés en une unité d'actionnement, disposés symétriquement l'un par rapport à l'autre, des deux côtés de l'élément articulé.

3. Manipulateur selon la revendication 1 ou 2, **caractérisé en ce que** la base (2) est montée à rotation sur un bâti (11), au moins deux entraînements en rotation, entraînés au sens d'une inculcation de force réciproque, étant prévus.

4. Manipulateur selon la revendication 3, **caractérisé en ce qu'**à la base (2) est associée une couronne dentée (13), dans laquelle s'engrène un entraînement auxiliaire (12) fixé de préférence sur le bâti (11), l'entraînement en rotation de la base et l'entraînement auxiliaire (12) étant entraînés au sens d'une inculcation de force réciproque.
